# EUROPEAN PATENT APPLICATION

(11) **EP 2 648 441 A1**
(43) Date of publication of application: **09.10.2013**
(21) Application number: 12360029.8
(22) Date of filing: 05.04.2012
(51) Int. Cl.: H04W 24/00, H04L 12/26

(54) **Probing techniques**

(71) Applicant: Alcatel Lucent, 75007 Paris (FR)
(72) Inventor: Wang, Yalou, Swindon Wiltshire SN5 5UG (GB)
(74) Representative: Script IP Limited

(57) **Abstract**

A method of determining operational characteristics of a GTP link operable to carry data traffic between nodes in a communication network, a GTP analyser and computer program product operable to perform that method. The method comprises: transmitting a probing request from a first node to a second node using the GTP link, the probing request comprising an indication of Quality of Service associated with the data traffic and a probing request transmission time stamp; receiving a probing response from the second node, the probing response comprising a probing request ingress reception time stamp and a probing response transmission time stamp, and determining, based on the probing request and the probing response, operational characteristics of the GTP link. Aspects described provide far larger scope for detecting Quality of Service capability and performance statistics within GTP bearers compared to the GTP echo request and reply tool. Aspects provide great flexibility for network engineering, traffic analysis and fault diagnosis.

## Description

### FIELD OF THE INVENTION

The present invention relates to a method of determining operational characteristics of a GTP link operable to carry data traffic between two nodes in a communication network, a probing unit and computer program product operable to perform that method.

### BACKGROUND

Wireless telecommunications systems are known. In those known systems radio coverage is provided to user equipment, for example, mobile telephones, by geographical area. A base station is located in each geographical area to provide the required radio coverage. User equipment in the area served by a base station receives information and data wirelessly from the base station and transmits information and data wirelessly to the base station. In a High Speed Downlink Packet Access telecommunications network, data and information is sent between user equipment and a base station in data packets on a radio frequency carrier.

Base stations are connected to a core network through which user equipment data traffic passes. That core network typically comprises a mobile backhaul transport network which is IP based. It will be appreciated that data traffic carried by the core network may be of various types; for example, voice, video stream, SMS, Web traffic, email and similar. Each of those data types is typically handled with a different priority, depending on a Quality of Service (QoS) requirement associated with each type of data flow.

Knowledge of backhaul network performance capabilities for different data traffic flows may help inform network traffic engineering, management and fault diagnosis.

3G and 4G mobile backhaul transport networks are typically IP based and use Differentiated Services Code Point (DSCP) as an indicator of traffic priority.

Currently for GTP protocol, upon which 4G and 3G backhaul network traffic flows are carried, only a simple echo request and reply tool is provided, similar to PING in IP networks.

It is desired to provide a probing tool to allow information regarding backhaul network performance capabilities to be determined.

### SUMMARY

Accordingly, a first aspect provides a method of determining an operational characteristic of a GTP link operable to carry data traffic between two nodes in a communication network, the method comprising: transmitting a probing request from a first node to a second node using the GTP link, the probing request comprising an indication of Quality of Service associated with the data traffic and a probing request transmission time stamp; receiving a probing response from the second node, the probing response comprising a probing request ingress reception time stamp and a probing response transmission time stamp; and determining, based on the probing request and the probing response, an operational characteristic of the GTP link.

Base stations in a telecommunications network are connected to a core network through which user equipment data traffic passes. That core network typically comprises a mobile backhaul transport network which is IP based. It will be appreciated that data traffic carried by the core network may be of various types; for example, voice, video stream, SMS, Web traffic, email and similar. Each of those data types is typically handled with a different priority, depending on a Quality of Service (QoS) requirement associated with each type of data flow.

Knowledge of backhaul network performance capabilities for different data traffic flows may help inform network traffic engineering, management and fault diagnosis. 3G and 4G mobile backhaul transport networks are typically IP based and use Differentiated Services Code Point (DSCP) as an indicator of traffic priority. In 3G and 4G mobile networks such as WCDMA and LTE networks, Quality of Service differentiation ought to be supported on an end-to-end bearer basis. In order to determine efficient network operation and in order to maintain a network, there is a particular need to have some probing method based on Quality of Service base network performance. Such techniques could help to ensure that the network can provide the Quality of Service required.

In 3G and 4G backhaul networks, data traffic flows are carried on GTP tunnels (GPRS tunnelling protocol tunnels). GPRS Tunnelling Protocol (GTP) is a group of IP-based communications protocols used to carry GPRS within GSM, UMTS and LTE networks. Those GTP tunnels run on top of UDP and IP transport layers. The first aspect recognises that a GTP packet header may be extended and amended to act as a probing packet within a telecommunications network.

In the backhaul, each user traffic flow (end-to-end bearer) is carried on a GTP-U tunnel. Signalling traffic flows are carried over GTP-C tunnels. GTP tunnels have a one-to-one mapping to a traffic flow. The first aspect recognises generally that it would be advantageous to know, per GTP tunnel, performance and traffic behaviour such as delay, jitter, packet loss rate, link persistency and similar.

It will be understood that the simple echo request and echo response method currently used can only give a round trip time viewable by the node which initiates the echo request. That round trip time does not offer any indication of a single direction link performance. By time stamping the probing request and probing response, the trip time in each direction may be calculated. It will be appreciated that each node may calculate a uni-directional trip time, depending on time stamp information available to that node. It will be appreciated that a receiving node may take some time to prepare and send a probing response packet and thus by time stamping in ingress and egress, more accurate information regarding a GTP link may be determined.

The first aspect provides a new GTP extension header and message type suitable for tunnel Quality of Service performance probing. Quality of Service probing, according to embodiments, comprises a probing request and response process. A probing sending node is operable to assemble a probing request packet using a normal GTP header with extension and sequence number bit set. The message type and next extension header indicates that the sending node is probing, and that signalling is followed by a sender probing extension header. Padding data may be used to allow the sending node to control packet size as desired; for example, the sending node may probe path MTU or packet fragmentation as well as node processing capability for different packet sizes. The use of padding data may be implementation specific and the field may be left for experimental or proprietary use. When a receiving node receives the probing packet, it responds with a probing response packet which includes sender header followed by a receiver header. The padding data is also typically copied back.

According to one embodiment, the GTP link comprises a GTP tunnel. According to one embodiment, the GTP link comprises a set of GTP tunnels. According to one embodiment, the GTP link comprises a GTP path. According to one embodiment, the transmission occurs within a GTP link on which active user equipment data traffic is being carried. Accordingly, the probing method can be used in such a way that it is either embedded within a user traffic tunnel, or may be used out of band with a dedicated probing tunnel. It will be appreciated that a method using such probing signalling may also be used on a generic path level as well as for a specific GTP tunnel. The probing packet structure according to embodiments may allow probing in an established tunnel using live user traffic. That is to say, the probing packet structure allows in-band probing. Similarly, the probing packet structure may allow a new tunnel, thereby providing dedicated probing without live user traffic. In some embodiments, path level probing may be allowed by setting TEID equal to zero. It will thus be appreciated that probing methods described herein provide great flexibility for performance and link bearer status tests.

In relation to in-band probing, it will be appreciated that the sending of probing messages may be typically sparse, thereby disturbing real user traffic minimally. In-band probing may be used, according to some embodiments, to detect a bearer status (that is to say, to determine whether it is alive or dead) and may be used as a periodic monitor of a real link performance.

In relation to dedicated probing, a sending and receiving node may use a TEID with any probing rate it desires, thereby testing Quality of Service capability of a bearer path.

In one embodiment, a block of TEIDs may be reserved, for example, the top 256 TEIDs (65280 to 65535) and those TEIDs may be mapped directly to flow ID. As a result, the receiver does not need to check TEID to gather Quality of Service performance differentiation statistics.

In order to perform path probing, the TEID field may be set to zero and, thus, a GTP echo request and response process may essentially be performed, albeit with more information provided by appropriate time stamps.

GTP probing techniques according to methods described herein do not only apply to user plane traffic over GTP-U tunnels and paths; it will be appreciated that it may also be used for GTP-C tunnels and paths for signalling traffic performance.

According to embodiments, determined operational characteristics comprise an indication of directional GTP link performance. Accordingly, it will be appreciated that each host node both sending and receiving may use the time stamps, flow ID and sequence number information to calculate end-to-end bearer or tunnel delay, jitter, packet loss and other similar traffic statistics. In particular, a series of probing requests performed on the same GTP link may reveal a scattering of trip times, the calculated trip times for each probing request and response may be used to give a numerical indication of GTP link jitter. If the values are found to be approximately the same, the jitter on that GTP link is considered to be low.

According to some embodiments, the indication of quality of service comprises a DSCP code. Accordingly, the DSCP codes used in the IP layer may be reused ion relation to the GTP layer to offer a QoS indication. Different DCSP codes may be used in relation to user equipment data traffic having different desired QoS characteristics. It will be appreciated that a probing process may be implemented such that several probing messages are sent on a GTP link, each of those probing requests being sent in relation to a different DSCP or QoS, thereby to identify the suitability of a GTP link for any particular user equipment data traffic flow type.

In some embodiments, the probing request and probing response further comprise a sequence number or indication of a sending sequence. By including a sequence number field in the probing message (and response), that sequence information may be used to calculate various GTP link operational characteristics, for example, packet loss rate and an indication of typical packet mis-ordering experienced on a gived GTP link. Simply repeating a probing request using the same QoS indication but without a sequence number, may offer an indication of the delay and jitter associated with a given GTP link of interest, as described above. Provision of an indication of sending sequence offers further operactional characteristics of a GTP link to be calculated.

According to some embodiment, the probing request further comprises a configurable length payload. Accordingly, the performance of a GTP link including a payload may be tested.

According to one embodiment, the method further comprises periodically repeating the transmitting and receiving steps. By repeating the steps, more detailed information may be calculated or determined in relation to the GTP links being probed.

A second aspect provides a computer program product operable, when executed on a computer, to perform the method of the first aspect.

A third aspect provides a GTP link analyser operable to determine operational characteristics of a GTP link operable to carry data traffic between nodes in a communication network, the analyser comprising: transmission logic operable to transmit a probing request from a first node to a second node using the GTP link, the probing request comprising an indication of Quality of Service associated with the data traffic and a probing request transmission time stamp; reception logic operable to receive a probing response from the second node, said probing response comprising a probing request ingress reception time stamp and a probing response transmission time stamp, and determination logic operable to determine, based on the probing request and the probing response, operational characteristics of the GTP link.

The third aspect recognises that most nodes in a telecommunications network are equipped with a GTP link analyser and that analyser may be operable to use information contained within probing request and response messages in accordance with a method of the first aspect. The third aspect also recognises that a GTP analyser unit may be usefully employed at routers at the IP layer through which the GTP packets pass. Those packets may be captured and analysed, thereby providing a means to probe "per hop" performance in an IP based backhaul. It is possible to have a protocol analyser attached to routers provided between nodes. That is to say, it is possible to attach an analyser to any one of routers between sending and receiving nodes. In this way, GTP probing packets may be captured by routers. Since the sender header is included in the receiver header, an analyser needs only to capture the responding path to calculate a per hop performance. It will be appreciated that such a method may be beneficial if the forwarding and return paths are not on the same physical path. When they are on the same path provided by the same router, the GTP probing packets may indicate a per hop link performance.

Accordingly, it can be seen that aspects provide a packet analyser operable on each router on an IP transport layer, that can capture GTP link probing packets, and obtain per hop traffic statistics by comparing the timestamps and QoS information in the captured packets on each such router.

In some embodiments, the GTP link comprises a GTP tunnel. In some embodiments, the GTP link comprises a set of GTP tunnels. In some embodiments, the GTP link comprises a GTP path.

In some embodiments, the determination logic is operable to determine an operational characteristic which comprises an indication of directional GTP link performance.

In some embodiments, the indication of quality of service comprises a DSCP code.

In some embodiments, the probing request and probing response further comprise a sequence number.

In some embodiments, the probing request further comprises a configurable length payload.

In some embodiments, the analyser further comprises repetition logic operable to periodically repeat the transmitting and receiving steps.

In some embodiments, the transmission logic is operable to transmit the probing request within a GTP link on which active user equipment data traffic is being carried.

Further particular and preferred aspects are set out in the accompanying independent and dependent claims. Features of the dependent claims may be combined with the features of the independent claims as appropriate, and in combinations other than those explicitly set out in the claims.

### BRIEF DESCRIPTION OF THE DRAWINGS

Embodiments of the present invention will now be described further with reference to the drawings, in which:
Figure 1 illustrates the main components of a telecommunications network according to one embodiment;
Figure 2 illustrates schematically GTP tunnelling between network nodes in a telecommunications network backhaul;
Figure 3 illustrates schematically the structure of a GTP-U packet header according to one embodiment;
Figure 4 illustrates a probing node extension header according to one embodiment;
and
Figure 5 illustrates a receiving node probing extension according to one embodiment.

### DESCRIPTION OF THE EMBODIMENTS

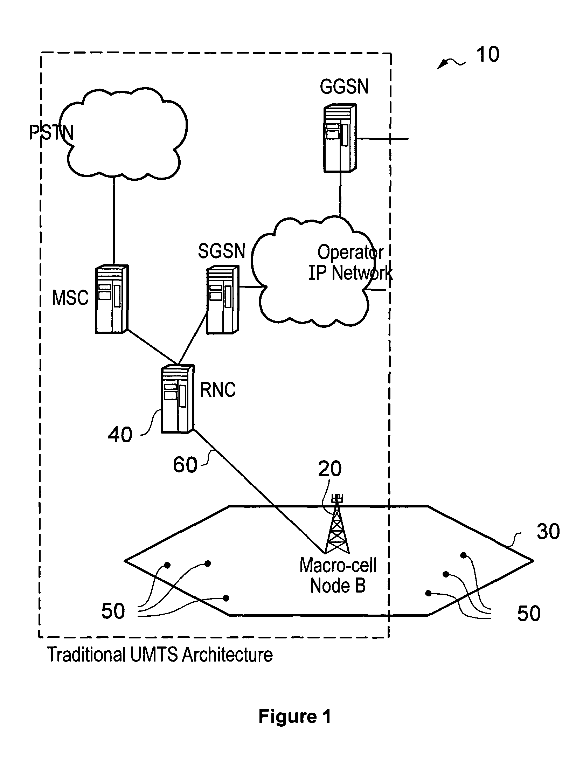

Figure 1 illustrates generally a wireless telecommunications system 10. User equipment 50 roam through the wireless telecommunications system. Base stations are provided which support areas of radio coverage 30. A number of such base stations are provided and are distributed geographically in order to provide a wide area of coverage to user equipment 50. When user equipment are within an area served by a base station 30, communications may be established between the user equipment and the base station over associated wireless radio links. Each base station typically supports a number of sectors within the geographical area of service 30.

Typically, a different antenna within a base station supports each associated sector. Accordingly, each base station 20 has multiple antennas and signals sent through the different antennas are electronically weighted to provide a sectorised approached. Of course, it will be appreciated that Figure 1 illustrates a small sub-set of the total number of user equipment and base stations that may be present in a typical communications system.

The wireless communications system shown in Figure 1 is a typical 3G UMTS system and each base station (node B) is managed by a Radio Network Controller (RNC) 40. The RNC 40 controls operation of the wireless communications system by communicating with a plurality of base stations over a backhaul communications link 60. The network controller also communicates with user equipment 50 via each base station and thus effectively manages the entire wireless communications system.

It will be appreciated that in a 4G or LTE network, each base station (E node B) is connected to a Mobility Management Entity (MME) and a Serving Gateway (SGW) which subsequently connects to a Packet Gateway (PGW). In either case, it can be seen that the wireless links between user equipment 50 and base stations 20 are supported in the core network by wired IP data traffic transfer. It will be understood that in each case base stations are connected to a core network through which user equipment data traffic passes. That core network typically comprises a mobile backhaul transport network which is IP based. It will be appreciated that data traffic carried by the core network may be of various types; for example, voice, video stream, SMS, Web traffic, email and similar. Each of those data types is typically handled with a different priority, depending on a Quality of Service (QoS) requirement associated with each type of data flow.

Knowledge of backhaul network performance capabilities for different data traffic flows may help inform network traffic engineering, management and fault diagnosis. 3G and 4G mobile backhaul transport networks are typically IP based and use Differentiated Services Code Point (DSCP) as an indicator of traffic priority. In 3G and 4G mobile networks such as WCDMA and LTE networks, Quality of Service differentiation ought to be supported on an end-to-end bearer basis. In order to determine efficient network operation and in order to maintain a network, there is a particular need to have some probing method based on Quality of Service base network performance.

Such techniques could help to ensure that the network can provide the Quality of Service required.

In 3G and 4G backhaul networks, data traffic flows are carried on GTP tunnels (GPRS tunnelling protocol tunnels). Those GTP tunnels run on top of UDP and IP transport layers.

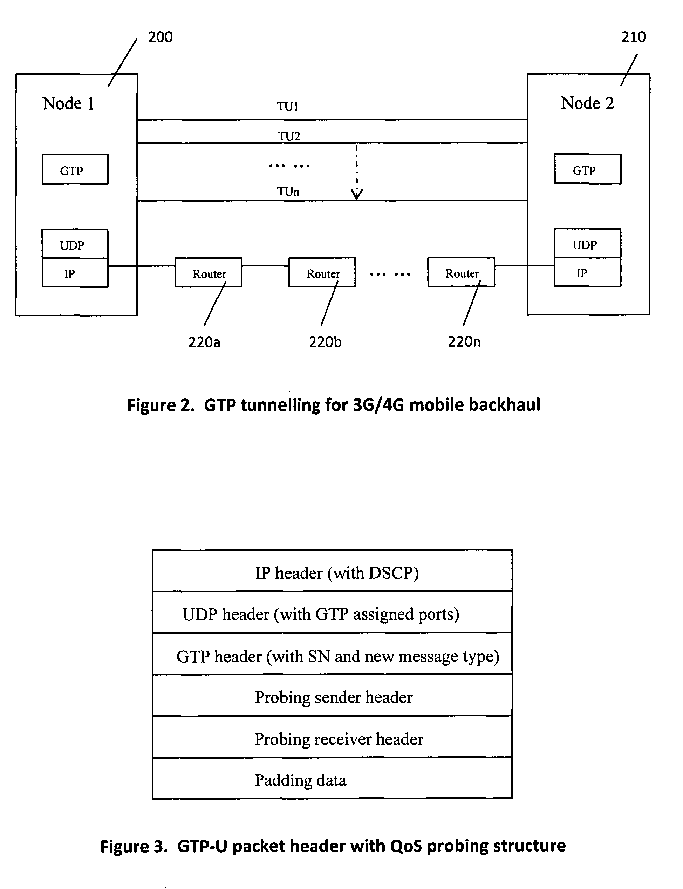

Figure 2 illustrates schematically GTP tunnelling in a 3G or 4G mobile backhaul network. Data traffic is sent between Node 1 200 and Node 2 210 via a series of routers 220a, 220b, 220n. It will be appreciated that the two nodes may be various types of node within a wireless telecommunications network, for example, RNC, SGSN and GGSN within a 3G WCDMA backhaul network, or E Node B, SGW and PGW within 4G LTE backhaul.

In the backhaul, each user traffic flow (end-to-end bearer) is carried on a GTP-U tunnel. Signalling traffic flows are carried over GTP-C tunnels. GTP tunnels are illustrated schematically in Figure 2 as TU1, TU2, TUn, as shown, and have a one-to-one mapping to a traffic flow. Quality of Service differentiation is provided by DSCP marking in a packets IP header. It will be appreciated that it would be advantageous to know, per GTP tunnel, performance and traffic behaviour such as delay, jitter, packet loss rate, link persistency and similar.

Currently in GTP protocol, only a simple echo request and echo reply tool similar to the PING tool provided in IP networks is available. Such a GTP echo runs over GTP path rather than on individual tunnels. In some GTP paths, for example, X2 interface between two E Node Bs, the echo request and reply tools are not used.

It will be understood that the simple echo request and echo response method currently used can only give a round trip time viewable by the node which initiates the echo request. That round trip time does not offer any indication of a single direction link performance. DSCP may be marked in the header of a GTP echo request and thus it is possible to get different round trip delay figures associated with each type of DSCP and thus an indication of a round trip time for data flows having a particular Quality of Service. However, it will be appreciated that such round trip times offer information which is far from adequate.

Before describing embodiments in detail, a general summary is provided. Aspects introduce a new GTP extension header and message type suitable for tunnel Quality of Service performance probing. The probing method can be used in such a way that it is either embedded within the user traffic tunnel, or may be used out of band with a dedicated probing tunnel. It will be appreciated that a method using such probing signalling may also be used on a generic path level.

The following table illustrates schematically a typical GTP-U header format.

| | Bits | | | | | | | |
|---|---|---|---|---|---|---|---|---|
| Octets | 8 | 7 | 6 | 5 | 4 | 3 | 2 | 1 |
| 1 | Version | | | PT | (*) | E | S | PN |
| 2 | Message Type | | | | | | | |
| 3 | Length (1^{st} Octet) | | | | | | | |
| 4 | Length (2^{nd} Octet) | | | | | | | |
| 5 | Tunnel Endpoint Identifier (1^{st} Octet) | | | | | | | |
| 6 | Tunnel Endpoint Identifier (2^{nd} Octet) | | | | | | | |
| 7 | Tunnel Endpoint Identifier (3^{rd} Octet) | | | | | | | |
| 8 | Tunnel Endpoint Identifier (4^{th} Octet) | | | | | | | |
| 9 | Sequence Number (1^{st} Octet)^{1) 4)} | | | | | | | |
| 10 | Sequence Number (2^{nd} Octet) ^{1) 4)} | | | | | | | |
| 11 | N-PDU Number^{2) 4)} | | | | | | | |
| 12 | Next Extension Header Type^{3) 4)} | | | | | | | |

| | | | | | | | | |
|---|---|---|---|---|---|---|---|---|
| NOTE 0:(*) This bit is a spare bit. It shall be sent as '0'. The receiver shall not evaluate this bit. NOTE 1: This field shall only be evaluated when indicated by the S flag set to 1. NOTE 2: This field shall only be evaluated when indicated by the PN flag set to 1. NOTE 3: This field shall only be evaluated when indicated by the E flag set to 1. NOTE 4: This field shall be present if and only if any one or more of the S, PN and E flags are set. | | | | | | | | |

Figure 3 illustrates schematically the structure of a GTP-U packet header according to one embodiment. Figure 3 illustrates a whole Quality of Service probing packet. It can be seen that there is no change to the IP/UDP header. That is to say, for particular data the IP/UDP header information remains the same. Within that IP header, a requested DSCP is maintained. That DSCP is used as before to be indicative of Quality of Service. The UDP port is configured for the use of GTP. The GTP header information is altered and comprises a new message type and a new extension header type as further defined below.

### New Message Type

According to embodiments, two new message types are proposed, namely a probing centre packet which indicates that a GTP packet is a Quality of Serving probing packet sent by the originating node, and a probing receiver packet which is a GTP packet comprising a Quality of Serving probing packet which is sent by a receiving node. The coding, which is typically 1 byte, of the new message type can use any non-used and agreed value within a header and many may be available.

### New Extension Header Type

According to embodiments, two new extension header types are proposed, namely a probing sender header which indicates that the next extension header relates to a Quality of Service probing sender, and a probing receiver header which is indicative that the next extension header relates to a Quality of Service probing responder. Again, the coding (1 byte) of such a new extension header type may use any non-used and any agreed value, and many are available.

In relation to a Quality of Service probing packet, the E bit provided in the typical GTP header set out in the table above is set to signal that a probing header exists. It will be understood that even though providing a sequence number in a GTP header is optional, provision of such a sequence number is desirable according to some embodiments and, thus, an S flag is set. Provision of sequence numbers can assist, according to some embodiments, the probing process. For example, Quality of Service probing may then be performed in a manner which allows calculation of packet loss rate and to see path mis-ordering performance and similar. As a result, by setting S in the GTP header, the sequence number need not be carried in the extension header. Of course, it will be appreciated that the sequence number may be carried in the extension header according to some embodiments.

### Quality of Service Probing Sender Extension Header

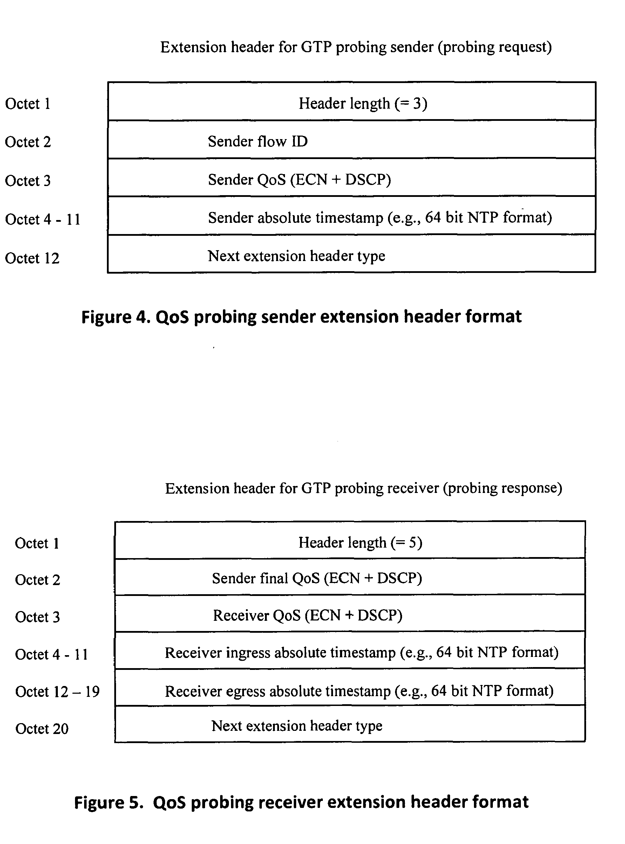

Figure 4 illustrates a probing node extension header according to one embodiment. In the extension header illustrated in Figure 4, the fields defining header length and next extension header are set according to GTP protocol definition. Three new fields are introduced for Quality of Serving probing purposes. Those fields are sender flow ID comprising 1 byte, sender Quality of Service comprising 1 byte, and sender absolute time stamp comprising 8 bytes. The sender flow ID field marks the flow as being a GTP Quality of Service probing packet. Although a flow can be identified using TEID, use of a flow ID which is copied back in a receiving node's response can represent an improvement.

The sender Quality of Service field is copied from a packet's path IP header. It will be understood for IP v4 that information can be found in the DS field, and for IP v6 that information is found in the "traffic class" field. The sender Quality of Service field includes a DSCP which has been marked and ECN bits.

The sender absolute time stamp field comprises 64 bits (8 bytes). According to some embodiments, it may use a standard format, for example, an NTP 64 bit time stamp or a specific time stamp such as an ICMP 32 bit time plus 32 bit extension for smaller timescales. The time stamp is typically an absolute one relative to a defined universal time. A number of well-defined universal times are available for general Internet use.

### Quality of Service Probing Receiver Extension Header

Figure 5 illustrates a receiving node probing extension according to one embodiment. According to the extension header shown in Figure 5, header length and next extension header fields are set as per GTP protocol definition. Four new fields are introduced for Quality of Service probing purposes. Those four fields are: sender final Quality of Service (1 byte), receiver Quality of Service (1 byte), receiver ingress absolute time stamp (8 bytes) and receiver egress absolute time stamp (8 bytes).

The sender final Quality of Service field is copied from the received packet's path IP header when finally received at the receiving node. That is to say, it is copied from the DS field in IP v4 and the traffic class field in IP v6. It thus includes a DSCP, as has been marked, and DCN bits. It will be appreciated that DSCP and ECN fields may be remarked en route by IP path routers and, thus, returning this field to the originating node may help to identify if such re-marking on an end-to-end path level has occurred in respect of this packet.

The receiver Quality of Service field will be set, according to some embodiments, to be the same as the sender Quality of Service. This field is copied from a packet's path IP header (DS for IP v4, traffic class for IP v6). It includes the DSCP which has been marked and the ECN bit from the receiver.

The receiver ingress absolute time stamp field represents a time stamp when a probing packet has been received by the receiving node from the sender. The format chosen for the time stamp will, according to embodiments, comprise the same format as that chosen by a sending node.

The receiver egress absolute time stamp field comprises a time stamp which indicates when the probing response packet leaves the receiving node.

### Quality of Service Probing Operation for GTP Tunnels and Path

Quality of Service probing, according to embodiments, comprises a probing request and response process. A probing sending node is operable to assemble a probing request packet using a normal GTP header with extension and sequence number bit set. The message type and next extension header indicates that the sending node is probing, and that signalling is followed by a sender probing extension header. Padding data may be used to allow the sending node to control packet size as desired; for example, the sending node may probe path MTU or packet fragmentation as well as node processing capability for different packet sizes. The use of padding data may be implementation specific and the field may be left for experimental or proprietary use. When a receiving node receives the probing packet, it responds with a probing response packet which includes sender header followed by a receiver header. The padding data is also typically copied back.

### Sender Probing Flow Control

A sending node or host can have various controls allowing it to probe the characteristics of traffic flow. It will be appreciated that the probing techniques may have various uses and the following list is not exhaustive. The sequence number field included in the probing message may be used to calculate packet loss rate and mis-ordering, for example. An FID field may be used to inject each flow for each DSCP code (with different TEID) to probe end-to-end bearer or tunnel performance behaviour for each DSCP flow, thereby gathering Quality of Service differentiation statistics across different tunnels. Furthermore, a probing flow injection rate may be controlled and a high rate flooding may be used to probe bearer or tunnel throughput capability and a sparse injection may be used for simple tests to determine whether a path is alive.

It will be appreciated that each host node both sending and receiving may use the time stamps, flow ID and sequence number information to calculate end-to-end bearer or tunnel delay, jitter, packet loss and other similar traffic statistics.

### Probing Per Tunnel and Per Path

The probing packet structure according to embodiments may allow probing in an established tunnel carrying live user traffic. That is to say, the probing packet structure allows in-band probing. Similarly, the probing packet structure may allow a new tunnel, thereby providing dedicated probing without disturbing live user traffic. In some embodiments, path level probing may be allowed by setting TEID equal to zero. It will thus be appreciated that probing methods described herein provide great flexibility for performance and link bearer status tests.

In relation to in-band probing, it will be appreciated that the sending of probing messages may be typically sparse, thereby disturbing real user traffic minimally. In-band probing may be used, according to some embodiments, to detect a bearer status (that is to say, to determine whether it is alive or dead) and may be used as a periodic monitor of a real link performance.

In relation to dedicated probing, a sending and receiving node may use a TEID with any probing rate it desires, thereby testing Quality of Service capability of a bearer path.

In one embodiment, a block of TEIDs may be reserved, for example, the top 256 TEIDs (65280 to 65535) and those TEIDs may be mapped directly to flow ID. As a result, the receiver does not need to check TEID to gather Quality of Service performance differentiation statistics.

In order to perform path probing, the TEID field may be set to zero and, thus, a GTP echo request and response process may essentially be performed, albeit with more information provided by appropriate time stamps.

GTP probing techniques according to methods described herein do not only apply to user plane traffic over GTP-U tunnels and paths; it will be appreciated that it may also be used for GTP-C tunnels and paths for signalling traffic performance.

### IP Level and Per Hop Probing

If Quality of Service path performance probing is required on a generic IP network, it is possible to use probing methods similar to those described herein. It is possible to have a protocol analyser attached to routers provided between nodes. That is to say, it is possible to attach an analyser to any one of routers 220a, 220b to 220n shown in Figure 2 between Node 1 200 and Node 2 210. In this way, GTP probing packets may be captured by routers. Since the sender header is included in the receiver header, an analyser needs only to capture the responding path to calculate a per hop performance. It will be appreciated that such a method may be beneficial if the forwarding and return paths are not on the same physical path. When they are on the same path provided by the same router, the GTP probing packets may indicate a per hop link performance.

Aspects described provide far larger scope for detecting Quality of Service capability and performance statistics within GTP bearers compared to the GTP request and reply tool. , Aspects provide great flexibility for network engineering, traffic analysis and fault diagnosis.

It will be appreciated that a person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown. The description and drawings merely illustrate the principles of the invention. It will thus be appreciated that those skilled in the art will be able to devise various arrangements that, although not explicitly described or shown herein, embody the principles of the invention and are included within its scope as defined by the claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of determining an operational characteristic of a GTP link operable to carry data traffic between nodes in a communication network, said method comprising:
transmitting a probing request from a first node to a second node using said GTP link, said probing request comprising an indication of Quality of Service associated with said data traffic and a probing request transmission time stamp;
receiving a probing response from said second node, said probing response comprising a probing request ingress reception time stamp and a probing response transmission time stamp, and
determining, based on said probing request and said probing response, an operational characteristic of said GTP link.

2. A method according to claim 1, wherein said GTP link comprises a GTP tunnel.

3. A method according to claim 1, wherein said GTP link comprises a GTP path.

4. A method according to any preceding claim, wherein said determined operational characteristics comprise an indication of directional GTP link performance.

5. A method according to any preceding claim, wherein said indication of quality of service comprises a DSCP code.

6. A method according to any preceding claim, wherein said probing request and probing response further comprise a sequence number.

7. A method according to any preceding claim, wherein said probing request further comprises a configurable length payload.

8. A method according to any preceding claim, further comprising periodically repeating said transmitting and receiving steps.

9. A method according to any preceding claim, wherein said transmission occurs within a GTP link on which active user equipment data traffic is being carried.

10. A computer program product operable, when executed on a computer, to perform the method of any one of claims 1 to 9.

11. A GTP link analyser operable to determine an operational characteristic of a GTP link operable to carry data traffic between nodes in a communication network, said analyser comprising:
transmission logic operable to transmit a probing request from a first node to a second node using said GTP link, said probing request comprising an indication of Quality of Service associated with said data traffic and a probing request transmission time stamp;
reception logic operable to receive a probing response from said second node, said probing response comprising a probing request ingress reception time stamp and a probing response transmission time stamp, and
determination logic operable to determine, based on said probing request and said probing response, an operational characteristic of said GTP link.

## Amended claims

### Amended claims in accordance with Rule 137(2) EPC.

**1.** A method of determining an operational characteristic of a GTP link operable to carry data traffic between nodes in a communication network (10), said method comprising:
transmitting a probing request from a first node (200) to a second node (210) using said GTP link, said probing request comprising an indication of Quality of Service associated with said data traffic and a probing request transmission time stamp;
receiving a probing response from said second node (210), said probing response comprising a probing request ingress reception time stamp and a probing response transmission time stamp, and
determining, based on said probing request and said probing response, an operational characteristic of said GTP link.

**2.** A method according to claim 1, wherein said GTP link comprises a GTP tunnel.

**3.** A method according to claim 1, wherein said GTP link comprises a GTP path.

**4.** A method according to any preceding claim, wherein said determined operational characteristics comprise an indication of directional GTP link performance.

**5.** A method according to any preceding claim, wherein said indication of quality of service comprises a DSCP code.

**6.** A method according to any preceding claim, wherein said probing request and probing response further comprise a sequence number.

**7.** A method according to any preceding claim, wherein said probing request further comprises a conflgurable length payload.

**8.** A method according to any preceding claim, further comprising periodically repeating said transmitting and receiving steps.

**9.** A method according to any preceding claim, wherein said transmission occurs within a GTP link on which active user equipment data traffic is being carried.

**10.** A computer program product operable, when executed on a computer, to perform the method of any one of claims 1 to 9.

**11.** A GTP link analyser operable to determine an operational characteristic of a GTP link operable to carry data traffic between nodes in a communication network, said analyser comprising:
transmission logic operable to transmit a probing request from a first node (200) to a second node (210) using said GTP link, said probing request comprising an indication of Quality of Service associated with said data traffic and a probing request transmission time stamp;
reception logic operable to receive a probing response from said second node (210), said probing response comprising a probing request ingress reception time stamp and a probing response transmission time stamp, and
determination logic operable to determine, based on said probing request and said probing response, an operational characteristic of said GTP link.
